# Europäisches Patentamt

## European Patent Office

## Office européen des brevets

(19)

(11) Veröffentlichungsnummer: **0 097 145**
**B1**

(12) # EUROPÄISCHE PATENTSCHRIFT

(45) Veröffentlichungstag der Patentschrift:
14.10.87

(21) Anmeldenummer: **83890099.1**

(22) Anmeldetag: **15.06.83**

(51) Int. Cl.⁴: **H 02 P 8/00**

(54) Schaltungsanordnung zur Beeinflussung der Stromwendung.

(30) Priorität: **16.06.82 AT 2331/82**

(43) Veröffentlichungstag der Anmeldung:
**28.12.83 Patentblatt 83/52**

(45) Bekanntmachung des Hinweises auf die Patenterteilung:
**14.10.87 Patentblatt 87/42**

(84) Benannte Vertragsstaaten:
**DE FR GB IT**

(56) Entgegenhaltungen:
**EP-A-0 038 214**
**EP-A-0 044 290**
**US-A-3 824 440**

(73) Patentinhaber: **Friedmann & Maier Aktiengesellschaft, Friedmannstrasse 7, A-5400 Hallein bei Salzburg (AT)**

(72) Erfinder: **Brasseur, Georg, Dipl.- Ing., Eisslergasse 20, A-1130 Wien (AT)**

(74) Vertreter: **Gibler, Ferdinand, Dipl.Ing.Dr.tech., Dorotheergasse 7/14, A-1010 Wien (AT)**

## Beschreibung

Die Erfindung bezieht sich auf eine Schaltungsanordnung zur Beeinflussung der Stromwendung bei einem Lastzweipol mit überwiegend induktiver Komponente, insbesondere der Wicklung eines Schrittmotors, der durch einen dazu parallel geschalteten Kondensator zu einem Schwingkreis ergänzt ist, wobei eine Brückenschaltung mit zwei an eine Gleichstromquelle angeschlossenen, zueinander parallel geschalteten Brückenzweigen vorgesehen ist, von denen jeder zwei in Serie geschaltete Halbleiterschalteinrichtungen aufweist, von denen die eine durch einen Transistor gebildet ist, und die in der Brückendiagonale der zu dem Schwingkreis ergänzte Lastzweipol an die die beiden Halbleiterschalteinrichtungen eines jeden Brückenzweiges miteinander verbindenden Verbindungspunkte angeschlossen ist, wobei von den beiden Transistoren jeweils die eine Leistungselektrode mit der einen Polklemme der Gleichstromquelle verbunden ist.

Eine derartige Schaltungsanordnung ist z. B. durch die EP-A-0 044 290 bekannt geworden. Bei dieser ist eine Brückenschaltung von vier Transistoren vorgesehen, wobei zu zwei Transistoren je eine Diode antiparallel zur Kollektor-Emitterstrecke geschaltet ist und zu den beiden übrigen Transistoren je eine Diode in Serie geschaltet ist, die von dem Lastzweipol in Richtung zur Spannungsquelle sperrt.

Der Nachteil dieser bekannten Schaltung liegt darin, daß je zwei umgekehrt gepolte Transistoren verwendet werden müssen und sich daher die jeweils gleichzeitig durchgeschalteten einander diagonal gegenüberliegenden Transistoren in ihren Speicherzeiten erheblich unterscheiden. Dadurch ist es aber notwendig, eine sehr aufwendige Steuereinrichtung für die Ansteuerung der Transistoren vorzusehen, um eben diese unterschiedlichen Speicherzeiten der Transistoren berücksichtigen zu können. Dies ist aber nnur dadurch möglich, daß die den Stromfluß durch den Lastzweipol führenden, einander diagonal gegenüberliegenden Transistoren nacheinander gesperrt, bzw. deren Basisansteuerung nacheinander unterbrochen werden. Dabei ergibt sich bei der Auslegung der Steuereinrichtung die Schwierigkeit, daß die Speicherzeiten von einer Reihe von Betriebsbedingungen und unter anderem auch von der Temperatur abhängen und daher schwierig festzulegen sind. Trotzdem muß sichergestellt sein, daß beide Transistoren eines Strompfades gesperrt sind, bevor jene des anderen Strompfades durchgeschaltet werden, um die Stromrichtung im Lastzweipol umzukehren.

Ferner hat die bekannte Schaltung den Nachteil, daß zufolge der Tatsache, daß die beiden Transistoren in einer Brückendiagonale nicht genau gleichzeitig sperren, im unteren Brückenzweig ein Kreisstrom fließen kann, und zwar solange, bis der zufolge seiner Speicherzeit länger leitende, in der Brückendiagonale untere Transistor sperrt. Hiedurch kommt es zu höheren Verlusten in der Schaltung.

Weiters wurde durch die EP-A-38 214 eine Brückenschaltung zur Steuerung eines in der Brückendiagonale angeordneten Ankers eines Motors bekannt, bei der die Brückenzweige durch je eine Serienschaltung eines Thyristors und eines Transistors gebildet sind, wobei aber zu jedem Thyristor eine Freilaufdiode antiparallel geschaltet ist und zu jedem Transistor eine Diode antiparallel zu dessen Emitter-Kollektorstrecke geschaltet ist. Bei dieser bekannten Schaltung liegt im Diagonalzweig der Brücke lediglich die Ankerwicklung des Motors, wobei aber keinerlei Schaltungsmaßnahmen zur Ergänzung zu einem Schwingkreis vorgesehen sind. Die Stromwendezeit ist bei dieser bekannten Lösung lediglich durch die Höhe der Betriebsspannung bestimmt.

Der Nachteil dieser Schaltung liegt darin, daß dies nur für Motoren sehr kleiner Eingangsimpedanz geeignet, nicht aber für die Stromwendung bei einem Lastzweipol mit überwiegend induktiver Komponente, wie sie die Wicklung eines Schrittschaltmotors darstellt. Aufgrund der Freilaufdioden ergibt sich bei dieser Diode ein relativ langsames Schalten der Thyristoren, da der Laststrom über die Freilaufdiode fließen kann, bis dieser unter den Haltestrom des Thyristors abgesunken ist. Außerdem ergibt sich durch die Freilaufdioden eine Sperrspannung an dem Thyristor die durch die Flußspannung dieser Dioden bestimmt ist.

Diese Sperrspannung bedingt eine verhältnismäßig lange Speicherzeit der Thyristoren, die zwar ebenso wie die große Schaltzeit dieser bekannten Schaltung für die Steuerung eines Gleichstrommotors mit geringerer Eingangsimpedanz und geringerer Induktivität bedeutungslos ist, aber zur Steuerung eines Lastzweipoles mit überwiegend induktivem Anteil völlig ungeeignet wäre.

Ziel der Erfindung ist es, eine Schaltungsanordnung der eingangs erwähnten Art vorzuschlagen, bei der mit einer einfachen Steuereinrichtung zur Ansteuerung der Schaltelemente der Brückenschaltung das Auslangen gefunden werden kann.

Erfindungsgemäß wird dies dadurch erreicht, daß in jedem der beiden Brückenzweige die andere Halbleiterschalteinrichtung 1,1' mindestens vier in Reihe geschaltete Halbleiterschichten aufweist und durch mindestens einen Triggerimpuls durchschaltbar und bei Unterschreiten eines Mindest-Laststroms durch Sperren des im jeweils anderen Brückenzweig angeordneten Transistors 2,2' sperrt oder durch einen Sperrimpuls sperrbar ist und z. B. durch einen Thyristor 1,1', Fotothyristor, GTO-Thyristor oder eine diesen Bauteilen entsprechende Transistorschaltung gebildet ist, wobei die Halbleiterschalteinrichtungen 1,1' frei von mit Dioden bestückten Freilaufkreisen gehalten sind. Dadurch ist es möglich, beim Unterbrechen eines Strompfades einfach die Versorgung der Basis des Transistors zu unterbrechen. Nach Ablauf der Speicherzeit des Transistors unterbricht dieser rasch den Stromkreis und auch der im selben Strompfad liegende, mindestens vier Schichten aufweisende Halbleiterschalter sperrt. Die Durchschaltung dieses Halbleiterschalters kann durch einen kurzen Steuerimpuls, besser jedoch durch eine Serie von in kurzen Abständen aufeinanderfolgenden Steuerimpulsen erfolgen. Letzteres ist deshalb von Vorteil, weil es beim Durchschalten des Strompfades durch Schwingungsvorgänge zufolge der induktiven Komponente des Lastzweipoles und dem parallel geschalteten Kondensator dazu kommen kann, daß die Spannung im Diagonalzweig über die Speisespannung ansteigen kann und so den durch einen einzigen Impuls durchgeschalteten Halbleiterschalter zum Sperren gebracht werden kann, was zu Störungen führen kann.

Hat nun der Transistor des vorher durchgeschalteten Strompfades gesperrt und damit auch der mindestens vier Schichten aufweisende Halbleiterschalter zu sperren begonnen, so kommt es zu Schwingungsvorgängen im Diagonalzweig, die das Sperren des mindestens vier Schichten aufweisenden Haltleiterschalters unterstützen und beschleunigen. Jedenfalls ist es durch die erfindungsgemäße Schaltung möglich, gleichzeitig die Ansteuerung beider einen Strompfad steuernden Halbleiterschalter zu unterbrechen und so diesen Strompfad zu sperren. Dabei bereitet die Speicherzeit der Transistoren keine Probleme, da diese allein das Unterbrechen des Strompfades bewerkstelligen und der mit einem Transistor einen Strompfad bildende Thyristor zwangsläufig ebenfalls sperrt. Da kein Freilaufkreis parallel zum Thyristor geschaltet ist kommt es zu keiner Verlängerung der Schaltzeit, wie dies bei der aus der EP-A-38 214 bekannten Schaltung der Fall ist. Durch das, durch das Fehlen eines Freilaufkreises bedingte rasche Schalten des Thyristors als Folge des Unterbrechens des Strompfades durch den zugeordneten Transistor kann mit sehr einfachen Steuerschaltungen für die Ansteuerung der Halbleiterschaltung der Brückenschaltung das Auslangen gefunden werden.

Da bei der Ansteuerung der Schalter der Brückenschaltung nur die Speicherzeit je eines Transistors von Einfluß ist und daher relativ leicht berücksichtigt werden kann, ist es möglich, die Zeitdifferenz zwischen dem Unterbrechen der Ansteuerung des einen Transistors und dem Ansteuern des anderen Transistors sowie des diesem zugehörigen Halbleiterschalters mit der Resonanzfrequenz des Diagonalzweiges weitgehend abzustimmen.

So ist es aufgrund des Umstandes, daß nur eine Speicherzeit zu berücksichtigen ist, möglich, die Durchschaltung des vorher gesperrten; Strompfades kurz nach dem Unterbrechen der Ansteuerung des Transistors des vorher durchgeschalteten Strompfades durch Ansteuerung des entsprechenden Transistors und des zugehörigen Halbleiterschalters, z. B. eines Thyristors, vorzubereiten. Sobald aufgrund der zu diesem Zeitpunkt im Diagonalzweig ablaufenden Schwingungsvorgänge das Spannungspotential unter jenes der Versorgungsspannung sinkt, kommt es zu einem Stromfluß durch den vorbereiteten Strompfad, und es stellen sich wieder stabile Verhältnisse ein.

Durch eine entsprechende Anpassung der Resonanzfrequenz im Diagonalzweig an die Aufeinanderfolge der Schaltvorgänge in der Brücke gelingt es, die Ummagnetisierungsverluste in der Last klein zu halten. Grundsätzlich ist zu bemerken, daß als mindestens vier Schichten aufweisende Halbleiterschalter neben Thyristoren auch Fotothyristoren, bei denen eine potentialfreie Ansteuerung in jedem Falle gegeben ist oder GTO's (Gate Turn-off Thyristors) sowie diesen Bauteilen entsprechende Halbleiterschaltungsanordnungen verwendet werden können. Weiters ist auch die Verwendung von Triacs möglich. Allerdings muß dann dafür gesorgt werden, daß eine Stromführung durch den Triac in gegenüber dem Normalbetrieb in umgekehrter Richtung durch die Ansteuerung sicher unterbunden wird.

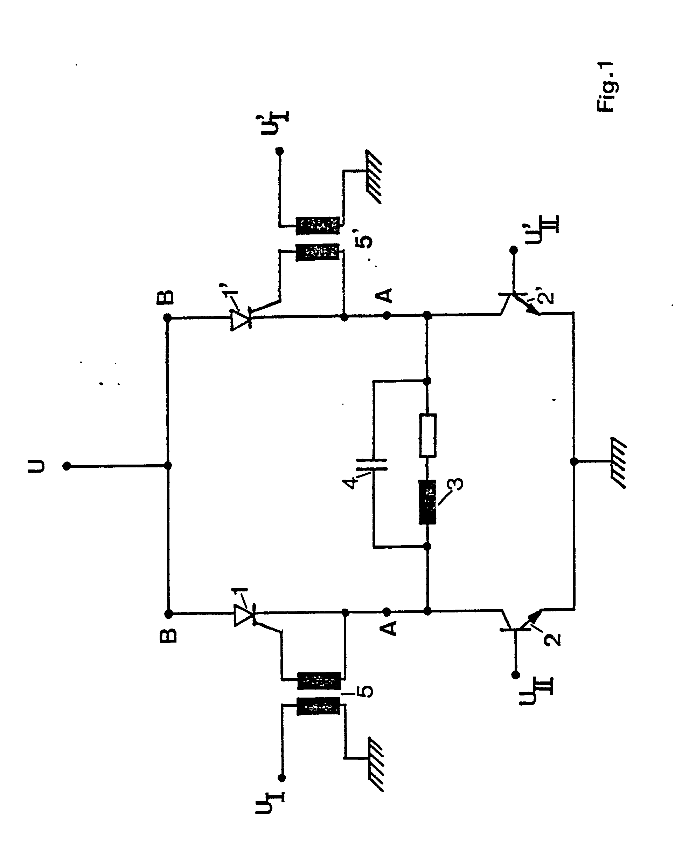

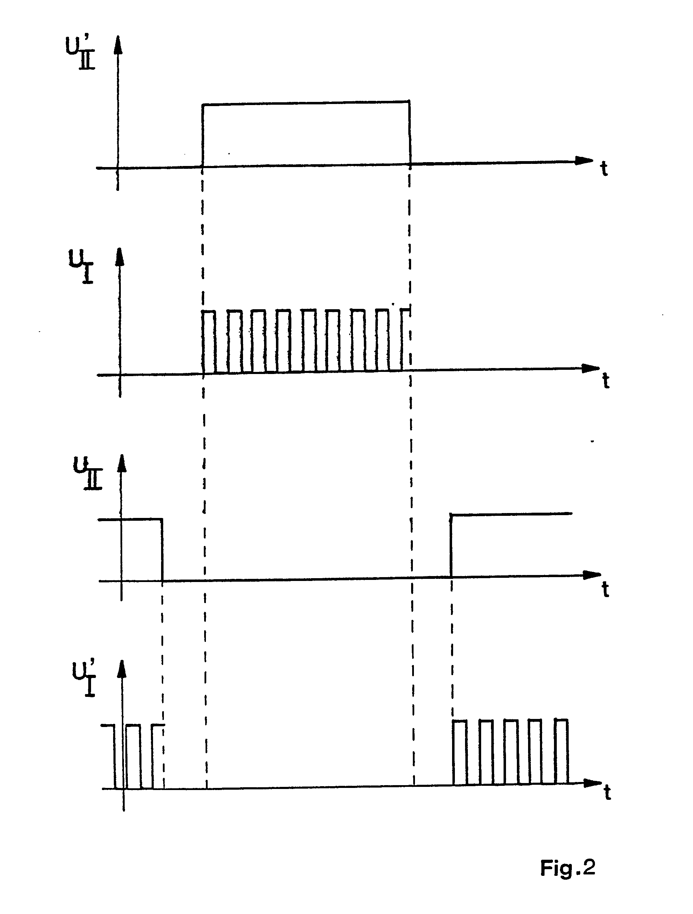

Die Erfindung wird nun an Hand der beiden Figuren der Zeichnung näher erläutert, wobei Figur 1 eine erfindungsgemäße Schaltungsanordnung zeigt.

Die erfindungsgemäße Schaltungsanordnung weist eine Brückenschaltung auf, deren beide Zweige durch eine Serienschaltung eines mindestens vier Schichten aufweisenden Halbleiterschalters 1, 1', der beim dargestellten Ausführungsbeispiel durch einen Thyristor gebildet ist, und eines Transistor 2, 2' gebildet sind. An den Verbindungspunkten der Halbleiterschalter 1, 1' und der Transistoren 2, 2' ist ein Diagonalzweig angeschlossen, der einen Lastzweipol 3 mit vorwiegend induktiver Komponente und einen dazu parallel geschalteten Kondensator 4 aufweist. Dieser Kondensator 4 ergänzt den Lastzweipol 3 zu einem Parallelschwingkreis.

Diese Brückenschaltung 1, 2, 1', 2' ist an eine Gleichspannungsquelle U angeschlossen.

Zur Ansteuerung der Thyristoren 1, 1' sind Impulstrafos 5, 5' vorgesehen, die von einer nicht dargestellten Steuereinrichtung, die auch die Transistoren 2, 2' ansteuert, mit Impulsen versorgt werden.

Die Ansteuerung der Halbleiterschalter 1, 1' und der Transistoren 2, 2' erfolgt stets in der Weise, daß ein den Diagonalzweig einschließender Strompfad gebildet wird.

Wurde z. B. der Thyristor 1' durch einen, besser jedoch durch eine Reihe von Zündimpulsen durchgeschaltet und der Transistor 2 in den leitenden Zustand gebracht und in diesem gehalten, so fließt Strom in der einen Richtung durch den Diagonalzweig 3, 4. Soll nun die Stromrichtung in diesem Diagonalzweig umgekehrt werden, so genügt es, daß die nicht dargestellte Steuereinrichtung die Zufuhr weiterer Zündimpulse zum Impulstrafo 5 unterbindet und die Basisvorspannung des Transistors 2 wegschaltet. Danach fließt vorerst der Strom weiter durch den angegebenen Strompfad bis nach Ablauf der Speicherzeit des Transistors 2 dieser rasch sperrt. Dadurch wird der minimale Laststrom des Thyristors 1' rasch unterschritten und der Thyristor 1' beginnt zu sperren.

Durch die durch das Sperren des Transistors 2 bedingte rasche Stromänderung kommt es im Diagonalzweig 3, 4 zum Schwingen des Parallelschwingkreises und damit zu Umladungsschwingungen, welche die Spannung der Gleichstromquelle U übersteigen können. Dadurch wird der Thyristor 1' u.U. einer seiner Durchlaßrichtung entgegengesetzen Spannung ausgesetzt, welche das Sperren des Thyristors 1' unterstützt und beschleunigt.

Nachdem die Basisvorspannung des Transistors 2 unterbrochen wurde, wird nach Ablauf einer bestimmten Zeit, die vorzugsweise in Abhängigkeit von der Resonanzfrequenz des Schwingkreises des Diagonalzweiges 3, 4 und der Speicherzeit des Transistors 2 bemessenist, gleichzeitig der Transistor 2' angesteuert und der Impulstrafo 5 mit Zündimpulsen versorgt und so ein neuer Strompfad vorbereitet.

Bei entsprechender Wahl dieser Zeitspanne kann erreicht werden, daß der neue Strompfad über die Schaltelemente 1 und 2' bereits zu einer Zeit vorbereitet ist zu der aufgrund des Sperrens des Strompfades über die Schaltelemente 1' und 2 die Spannung im Diagonalzweig jene der Gleichstromquelle U übersteigt. Dabei kann der Thyristor 1 noch keinen Strom führen. Aus diesem Grunde ist es auch zweckmäßig, die Thyristoren nicht nur mit einem einzigen kurzen Zündimpuls, sondern mit einer Reihe von Zündimpulsen zu versorgen.

Sobald nun die Spannung im Diagonalzweig aufgrund der Schwingungsvorgänge unter dem Wert der Spannung der Gleichstromquelle abgesunken ist und beim Thyristor 1 ein Zündimpuls eintrifft, zündet dieser und der Strompfad über den Thyristor 1 und den, Transistor 2' führt Strom. Durch diesen Stromfluß klingen auch die Schwingungsvorgänge im Diagonalzweig rasch ab und die Kommutierung ist beendet.

Da je eines der einen Strompfad bildenden Schaltelemente 1, 2' bzw. 1', 2 selbsttätig sperrt, sobald das zweite gesperrt hat, bzw. zu sperren beginnt, kann mit einer einfachen Steuerschaltung das Auslangen gefunden werden.

Außer dem dargestellten Thyristor samt potentialfreier Ansteuerung kann zwischen den mit A und B bezeichneten Punkten in der Figur auch ein Fotothyristor oder ein Triac oder ein GTO eingeschaltet werden. Eine weitere Möglichkeit besteht auch darin, statt je eines zumindest vier Schichten aufweisenden Halbleiterschalters zwei Transistoren mit unterschiedlicher Dotierung vorzusehen, deren gleichnamige Elektroden jeweils mit der Basis des anderen Transistors verbunden sind. Eine solche Schaltung läßt sich ebenfalls durch einen kurzen an die Basis eines Transistors angelegten Steuerimpuls in den leitenden Zustand bringen, der dann so lange erhalten bleibt, bis der Stromfluß auf einen zu kleinen Wert absinkt.

Außerdem läßt sich eine solche Schaltung auch durch Anlegen eines in seiner Polarität vom Zündimpuls verschiedenen Impuls an die Basis des gleichen zuvor mit einem Zündimpuls beaufschlagten Transistors in den Sperrzustand zurückkippen.

## Patentansprüche

Schaltungsanordnung zur Beeinflussung der Stromwendung bei einem Lastzweipol mit überwiegend induktiver Komponente (3), insbesondere der Wicklung eines Schrittmotors, der durch einen dazu parallelgeschalteten Kondensator (4) zu einem Schwingkreis ergänzt ist, wobei eine Brückenschaltung mit zwei an eine Gleichstromquelle (U) angeschlossenen, zueinander parallelgeschalteten Brückenzweigen vorgesehen ist, von denen jeder zwei in Serie geschaltete Halbleiterschalteinrichtungen (1, 2; 1', 2') aufweist, von denen die eine durch einen Transistor (2, 2') gebildet ist, und in der Brückendiagonale der zu dem Schwingkreis ergänzte Lastzweipol an die die beiden Halbleiterschalteinrichtungen eines jeden Brückenzweiges miteinander verbindenden Verbindungspunkte angeschlossen ist, wobei von den beiden Transistoren jeweils die eine Leistungselektrode mit der einen Polklemme der Gleichstromquelle verbunden ist, dadurch gekennzeichnet, daß in jedem der beiden Brückenzweige die andere Halbleiterschalteinrichtung (1, 1') mindestens vier in Reihe geschaltete Halbleiterschichten aufweist und durch mindestens einen Triggerimpuls durchschaltbar und bei Unterschreitung eines Mindest-Laststroms durch Sperren des im jeweils anderen Brückenzweig angeordneten Transistors (2, 2') sperrt oder durch einen Sperrimpuls sperrbar ist und z. B. durch einen Thyristor, Fotothyristor, GTO-Thyristor oder eine diesen Bauteilen entsprechende Transistorschaltung gebildet ist, wobei die Halbleiterschalteinrichtungen (1, 1') frei von mit Dioden bestückten Freilaufkreisen gehalten wird.

## Claim

Circuit arrangement for influencing the commutations in a two-terminal load network having a predominantly inductive component (3), particularly the winding of a stepping motor which is supplemented by a capacitor (4) which is connected in parallel with it to form a tuned circuit, in which arrangement a bridge circuit with two bridge branches is provided, wich bridge branches are connected in parallel with each other and are connected to a direct-current source (U), and each of which has two series-connected semiconductor switching devices (1, 2; 1', 2'), one of which is formed by a transistor (2, 2'), and the two-terminal load network supplemented to form the tuned circuit is connected in the bridge diagonal to the junction points connecting the two semiconductor switching devices of each bridge branch to each other, one power electrode of each of the two transistors being connected to one terminal of the direct-current source, characterized in that in each of the two bridge branches, the other semiconductor switching device (1, 1') has at least four series-connected semiconductor layers and can be switched to conduction by at least one trigger pulse and turns off when a load current drops below a minimum value, by turning off the transistor (2, 2') arranged in the other bridge branch in each case or can be turned off by a blocking pulse and is formed, for example, by a thyristor, photothyristor, GTO thyristor or a transistor circuit corresponding to these components, the semiconductor switching devices (1, 1') being kept free of free-wheeling circuits equipped with diodes.

## Revendication

Arrangement de circuit pour commander la commutation de courant dans le cas d'un dipôle à composante essentiellement inductive (3), notamment le bobinage d'un moteur pas à pas, lequel, avec un condensateur connecté en parallèle (4), forme un circuit oscillant; il est prévu un circuit en pont avec deux branches raccordées à une source de courant continu (U), connectées en parallèle, dont chacune possède deux dispositifs de commutation au moyen de semiconducteurs connectés en série (1, 2; 1', 2'), dont l'un est formé par un transistor (2, 2'), le dipôle, formant un circuit oscillant avec le condensateur dans la diagonale du pont, est raccordé aux points de connexion raccordant les deux dispositifs de commutation par semiconducteurs de chaque branche du pont, l'électrode de puissance de chaque transistor étant raccordée à l'une des bornes polaires de la source de courant continu,
   caractérisé en ce que
   dans chacune des deux branches du pont, l'autre dispositif de commutation par semiconducteurs (1, 1') possède au moins quatre couches de semiconducteurs connectées en série, peu être connecté par au moins une impulsion de déclenchement et, lorsque le courant de charge reste inférieur à une valeur minimum, bloque en bloquant le transistor situé dans l'autre branche du pont (2, 2') ou peut être bloqué par une impulsion de blocage, ledit dispositif étant composé par exemple d'un thyristor, d'un photothyristor, d'un thyristor blocable ou d'un circuit à transistor équivalent à ces composants, les dispositifs de commutation par semiconducteurs (1, 1') étant maintenus librement par des circuits à roue libre équipés de diodes.

Fig.1

Fig. 2